Europäisches Patentamt

European Patent Office

Office européen des brevets

(11) Publication number: **0 270 327 B1**

# EUROPEAN PATENT SPECIFICATION

(45) Date of publication of patent specification: **08.07.92**   (51) Int. Cl.⁵: **B60G  21/04**, B60G 17/02

(21) Application number: **87310535.7**

(22) Date of filing: **30.11.87**

(54) **Spring-constant variable stabilizer device.**

(30) Priority: **01.12.86 JP 286384/86**
        **16.07.87 JP 177767/87**

(43) Date of publication of application:
        **08.06.88 Bulletin  88/23**

(45) Publication of the grant of the patent:
        **08.07.92 Bulletin  92/28**

(84) Designated Contracting States:
        **DE FR GB**

(56) References cited:
        **EP-A- 0 152 914**
        **EP-A- 0 186 202**
        **DE-A- 2 849 015**
        **US-A- 4 206 935**
        **US-A- 4 589 678**

(73) Proprietor: **MITSUBISHI JIDOSHA KOGYO
KABUSHIKI KAISHA
33-8, Shiba 5-chome Minato-ku
Tokyo 108(JP)**

(72) Inventor: **Shibata,Nobuo
48,19-banchi Azafuchida Ohnishi-cho
Okazaki-shi, Aichi-ken(JP)**
Inventor: **Suzuki,Toshio
23,8-banchi Kitaushihiki Nishibessho-cho
Anzyo-shi Aichi-ken(JP)**
Inventor: **Fujii,Takashi
6,15-banchi Hinahon-machi
Okazaki-shi Aichi-ken(JP)**
Inventor: **Arai,Junichi
1750-5,Azakakenoue, Nakaedo
Kani-shi, Gifu-ken(JP)**
Inventor: **Kato,Hisami
5-116 Hatobukidai
Kani-shi, Gifu-ken(JP)**

(74) Representative: **Purvis, William Michael
Cameron et al
D. Young & Co. 10 Staple Inn
London WC1V 7RD(GB)**

Rank Xerox (UK) Business Services

## Description

The invention relates to a spring-constant variable stabilizer device to be disposed between left and right wheels of a vehicle.

It has been previously proposed to provide a stabilizer mechanism in a suspension system of a vehicle so designed that opposite ends of a stabilizer are secured to a lower arm through a link rod, and an intermediate portion thereof is rotatably supported on the vehicle body whereby when the left and right wheels of the vehicle are moved up and down in phase, a spring action caused by the stabilizer does not occur whilst when the upward and downward movement of the left and right wheels is out of phase, a constant spring force is caused with a middle portion of the stabilizer acting as a torsion bar. Upon upward and downward movement of the left and right wheels out of phase, the spring force of the stabilizer is made to act so that a fixed spring force may act with the middle portion of the stabilizer as a torsion bar and at the time of upward and downward movement of the left and right wheel out of phase, a phase difference thereof may be corrected, thus correcting a tendency to roll and improve the running stability of the vehicle.

However, if the roll rigidity is reinforced by the stabilizer mechanism, the vibration of the vehicle on the spring increases as the total spring constant of the suspension system increases, and when the vehicle runs on a wavy road surface such that the left and right wheels of the vehicle make the upward and downward movements out of phase, the comfort of the ride deteriorates.

In view of the foregoing, as one means for preventing deterioration of the comfort of the ride, there have been developed roll control systems for vehicles disclosed, for example, in Patent Specifications EP-A-0186202, US-A-2 802 674 and US-A-4 206 935.

In the systems disclosed in these patent specifications, a control cylinder is arranged on the end of a stabilizer whereby when the control cylinder is in an expansible state, a torsional torque of the stabilizer is not transmitted to a lower arm, as a consequence of which when the vehicle runs on a wavy road surface, the vibration of the vehicle on the spring is increased to prevent deterioration of the ride.

On the other hand, when the control cylinder is in a locked state to cease the expansion, the torsional torque of the stabilizer is transmitted to the lower arm effectively to prevent roll of the vehicle during running of the vehicle on a flat road.

However, in the aforementioned roll control system, the locked state of the control cylinder is not always produced at a neutral position but sometimes the piston stops at a position other than the neutral position. As the result, when the control cylinder is locked, the upper end thereof may not always be maintained at a constant level to bring forth a level difference between the left and right sides of the body, resulting in inconveniences such that the attitude of the vehicle becomes unstable and the running stability may not be secured.

According to one aspect of the present invention there is provided a spring-constant variable stabilizer device for a vehicle comprising a stabilizer member provided with a control cylinder comprising a piston slidable in a cylinder body so as to divide the interior of the cylinder body into an upper chamber and a lower chamber, the control cylinder being disposed between an end of the stabilizer member and a lower suspension arm supporting a wheel so that the torsional rigidity of the stabilizer member, disposed to generate a torsional torque according to upward and downward operation of the left and right wheels of the vehicle, is made variable, characterized in that the piston is urged in opposite directions by means of a pair of springs disposed in the respective chambers, operation check valves are disposed in hydraulic fluid passages which, respectively, communicate the upper and lower chambers with a reservoir chamber, the operation check valves are each formed to be opened simultaneously by one pilot operation, and a hydraulic fluid port of a fluid passage in communication with the reservoir chamber is formed in the cylinder body at a location assumed by the piston in a neutral position within the cylinder body.

Such a spring-constant variable type stabilizer device can prevent an unstable attitude of a vehicle when the control cylinder is locked.

The control cylinder may however be promptly and positively returned to its neutral position.

The two operation check valves provided on the control cylinder can simultaneously be actuated by the pilot operation thereby to vary the spring constant of the stabilizer.

According to another aspect of the invention there is provided a spring-constant variable stabilizer device for a vehicle comprising a stabilizer member provided with a control cylinder comprising a piston slidable in a cylinder body so as to divide the interior of the cylinder body into an upper chamber and a lower chamber, the control cylinder being disposed between an end of the stabilizer member and a lower suspension arm supporting a wheel so that the torsional rigidity of the stabilizer member, disposed to generate a torsional torque according to upward and downward operation of the left and right wheels of the vehicle, is made variable, characterized in that the piston is urged in opposite directions by means of a pair of springs disposed in the respective chambers, operation check valves are disposed in hydraulic fluid passages, respectively, which communicate the upper and lower chambers with a reservoir chamber, the operation check valves are each formed to be opened simultaneously by one open and closing operation actuator, a hydraulic fluid port of a fluid passage in communication with the reservoir chamber is formed in the cylinder body at a location assumed by the piston in a neutral position within the cylinder body so that locking can be made only in a neutral position, and in addition to the control cylinder, a shock absorber the dampening force of which is variable by actuation of an actuator is disposed between a body side of a vehicle and a suspension member, the shock absorber and the actuator of the control cylinder being individually actuated by a command signal from a controller, and a selection signal caused by manual operation and detection signals from detection means such as a vehicle speed sensor and a steering-wheel angle sensor are input into the controller.

The effective damping force of the shock absorber provided between the vehicle body and an axle can be adjusted to be high or low according to the running condition of the vehicle.

Thus the upper and lower chambers are defined within the cylinder body constituting the control cylinder with the piston urged in both directions by means of the springs disposed within the cylinder body, the operation check valves can be simultaneously opened by a single pilot operation, and the port of the hydraulic fluid passage in communication with the reservoir chamber is formed in the cylinder body in a neutral position of a piston stroke region within the cylinder body.

With the above-described arrangement, the following function is obtained:

When the control cylinder is in an expansible operating state, the torsional torque in the stabilizer is transmitted toward the lower arm in a state where the spring is compressed within the cylinder to give a soft stabilizer, whereas when the control cylinder is in a hydraulically locked state, the torsional torque in the stabilizer is transmitted toward the lower arm whereby the rigidity with respect to the roll of the vehicle is increased.

Furthermore, fluid flows into the reservoir chamber through the port formed in the cylinder body so as to correspond to the neutral position in the piston stroke region even if the piston within the cylinder body is in a position other than the neutral position when the control cylinder is hydraulically locked. Thus, the piston is returned to its complete neutral position, and upon the return of the piston to the complete neutral position, the port is closed to obtain the complete locked state of the control cylinder.

Even if the hydraulic locking operation of the control cylinder is effected in a state other than the neutral position of the piston within the cylinder, it is urged from both directions by the springs and therefore the piston will promptly be returned to its neutral position interdependently of the communicable state of the control cylinder.

The invention is diagrammatically illustrated by way of example in the accompanying drawings, in which:-

Figure 1 is a schematic view of a spring-constant variable stabilizer device according to one embodiment of the invention;

Figure 2 is a circuit diagram of a control cylinder of the device of Figure 1;

Figure 3 is a longitudinal sectional view of the control cylinder of Figure 2;

Figure 4 is a cross-sectional view taken on line IV-IV of Figure 3;

Figure 5 is a longitudinal sectional view taken on line VI-VI of Figure 4;

Figure 6 is a schematic view of a spring-constant variable type stabilizer device according to another embodiment of the invention; and

Figure 7 is a partly cutaway longitudinal sectional view of a shock absorber.

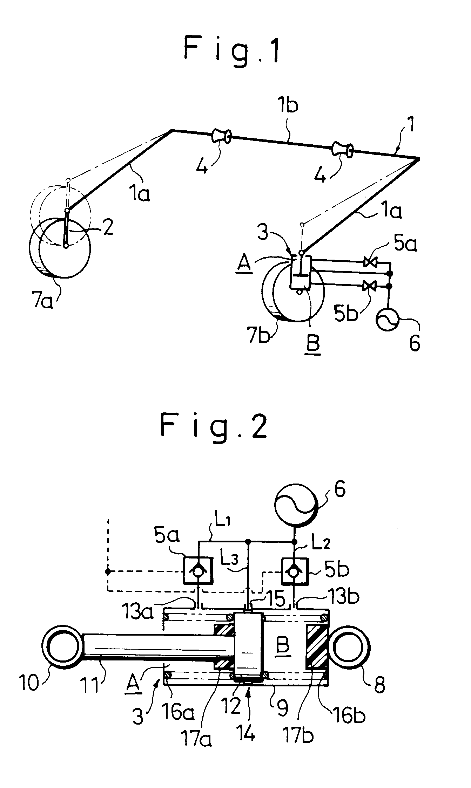

Referring to the drawings and firstly to Figure 1, one of a pair of bent arms 1a, 1a of a stabilizer 1 is connected to a lower arm (not shown) as a suspension member by way of a link rod 2, and a control cylinder 3 is disposed on a lower-arm connected portion at the end of the other of the arms 1a.

One of the control cylinders 3 can be provided at each end so as to increase the stroke of the stabilizer, but a single control cylinder 3 arranged on at least one side will achieve the effect desired by the invention.

The stabilizer 1 is rotatably mounted on the body of the vehicle (not shown) in supports 4 and 4 engaging an intermediate portion 1b of the stabilizer 1.

The control cylinder 3 has an upper chamber A and a lower chamber B in communication with each other through operation check valves 5a and 5b, respectively, the upper and lower chambers A and B being brought into communication with a reservoir chamber 6.

The interior of the control cylinder 3 can communicate with the reservoir chamber 6 through a separate oil passage.

7a designates a right wheel of the vehicle and 7b denotes a left wheel.

The control cylinder 3 is shown in more detail in Figure 2 and comprises a piston 12, associated with a piston rod 11 having a mounting eye 10 for connecting it to the stabilizer 1, slidably disposed within a cylinder body 9 having a mounting eye 8 for connecting it to the lower arm. The interior of the cylinder body 9 is divided by the piston 12 into an upper chamber A and a lower chamber B.

The inner wall of the cylinder body 9 in the vicinity of opposite ends thereof has ports 13a and 13b connected to hydraulic fluid passages L1 and L2.

A further fluid port 15 is provided in the inner wall of the cylinder body 9 at a neutral position 14 in an effective stroke region of the piston 12.

When the piston 12 is in either one of the upper chamber A or lower chamber B within the cylinder body 9, the port 15 connects the interior of the cylinder body 9 to a fluid passage L3 which is in communication with the reservoir chamber 6.

The operation check valves 5a and 5b are disposed in the passages L1 and L2 but no valve is disposed in the passage L3.

Within the cylinder body 9 are disposed a pair of springs 16a and 16b, which bias the piston 12 in opposite directions.

When the piston 12 is in the central neutral position 14, the pair of springs 16a and 16b are balanced.

Accordingly, when the operation check valves 5a and 5b are open and the upper and lower chambers A and B are communicated with each other, the piston 12 causes either of the spring 16a or 16b to be contracted by a load applied to the cylinder body 9 or the piston rod 11, so that the control cylinder 3 may be expanded and contracted.

The operation check valves 5a and 5b can be brought into the open state by mechanical pilot operation to allow a so-called dual flow, and upon release thereof, they serve thereafter as so-called check valves merely to allow flow in one direction.

In the present embodiment, within the cylinder body 9, buffers 17a and 17b are respectively disposed on the upper end surface of the piston 12 and the inner bottom surface of the cylinder body 9 to limit significant movement of the piston 12.

When the operation check valves 5a and 5b are open, the upper and lower chambers A and B in the control cylinder 3 are communicated with each other to assume a so-called free state wherein the movement of the piston 12 is not restricted within the range of the effective stroke thereof.

Therefore, the cylinder body 9 mounted on the wheel side is moved up and down according to the upward and downward operation of the left wheel 7b of the running vehicle, and as the stabilizer 1 swings upon the upward and downward operation of the other, right wheel 7a, the piston 12 mounted on the arm 1a is moved up and down.

Accordingly, in the open state of the operation check valves 5a and 5b, the stabilizer 1 is operatively connected with the right wheel 7a to assume a so-called stabilizer soft condition in which the end of the arm 1a swings.

In the piston-free operating state, any shortage of fluid in the control cylinder 3 is made-up from the reservoir chamber 6, and conversely, and surplus of fluid in the control cylinder 3 is absorbed by the reservoir chamber 6.

However, when the operation check valves 5a and 5b are caused to act as check valves, the upper and lower chambers A and B within the control cylinder 3 are separated from each other, and therefore, the movement of fluid between the chambers A and B is cut off, as a consequence of which both movements of expansion and pressure sides of the piston 12 assume the locked state.

This brings forth the state of a rigid coupling between the stabilizer 1 and the left and right wheels, and the so-called state of stabilizer action wherein the upward and downward movement of the right wheel 7a and left wheel 7b out of phase generates a torsional torque in the stabilizer 1.

Where the operation check valves 5a and 5b function as check valves by release of the pilot operation, thereafter movement of the piston 12 within the cylinder body 9 is controlled by the port 15 provided at the central position of the cylinder body 9.

That is, for example, when the piston 12 is located in the lower chamber B, working fluid from the upper chamber A will be passed to the reservoir chamber 6 through the port 15 upon withdrawal of the piston rod 11 from the cylinder body 9 caused by repulsion of the spring 16b, and at the same time, working fluid in the lower chamber B will be made-up from the reservoir chamber 6 through the operation check valve 5b. When in the course of movement the piston 12 reaches the neutral position 14, the outer periphery of the piston 12 will close the port 15 to bring the upper chamber A into a locked state to prevent further movement of the piston 12 and to cease the expansion of the control cylinder 3, thus assuming the locked state.

In like manner when the piston 12 is present in the upper chamber A, working fluid from the reservoir chamber 6 is replenished through the operation check valve 5a in the upper chamber A which is subjected to negative pressure by the movement of the piston 12 subjected to repulsion of the spring 16a, and at the same time working fluid within the lower chamber B is absorbed into the reservoir chamber 6 through the port 15. When the piston reaches the neutral position 14 in the course of movement, the outer periphery of the piston 12 closes the port 15 to bring the lower chamber B into the locked state to prevent further movement of the piston 12 and to cease the expansion of the control cylinder 3, thus assuming the hydraulically locked state.

When the control cylinder 3 is locked at the neutral position, the arm 1a of the stabilizer 1 and the lower arm are connected in the so-called rigid state.

Furthermore, even if the control cylinder should be expanded in a great stroke when the operation check valves 5a and 5b are in the open state, the piston would block the ports 13a or 13b to bring forth the so-called fluid locked state whereby the ends of the cylinder body 9 are protected from damage by over extension and bottoming-out. Even if the piston strokes beyond the limit of the over extension and bottoming-out, damage is prevented by the buffers 17a and 17b.

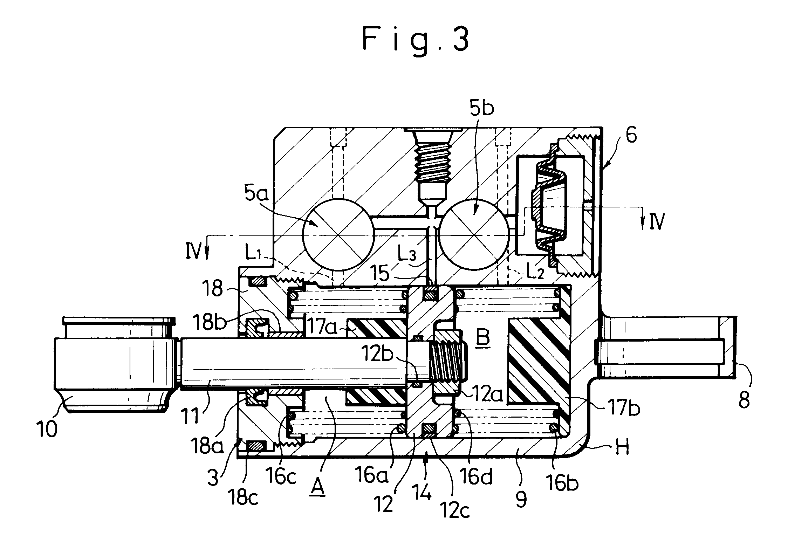

A specific embodiment is shown in Figures 3 to 5 and has the control cylinder and its circuit integrally formed within a suitable housing H and in compact form.

Internally the housing H comprises the control cylinder 3 and the two operation check valves 5a, 5b, the reservoir chamber 6, the fluid passages L1, L2 to allow communication between the upper and lower chambers A and B within the control cylinder 3 and the reservoir chamber 6, and the fluid passage L3 to allow communication between the interior of the control cylinder 3 and the reservoir chamber 6.

The housing H has a projecting eye 8 to form a mounting for the lower arm on the control cylinder 3.

Within the cylinder body 9 formed in a bottomed cylindrical configuration in a part of the housing H is slidably received the piston 12 which divides the interior of the cylinder body 9 into the upper chamber A and the lower chamber B.

The piston 12 is connected to the lower end of the piston rod 11 by a piston nut 12a, and the piston rod 11 is sealed in the piston 12 by a sealing ring 12b and has its upper end projecting externally of the upper end of the cylinder 9, the projecting end having a mounting eye 10 for the stabilizer 1.

The upper end of the cylinder body 9 is closed by applying a cap member 18 thereto, and the piston rod 11 extends through the axis of the cap member 18.

In the inner periphery of the cap member 18 are disposed a fluid seal 18a and a bearing 18b, and the inner peripheral surfaces of the seal 18a and the bearing 18b are in sliding contact with the outer peripheral surface of the piston rod 11.

An O-ring 18c is disposed around the outer peripheral end of the cap member 18.

The buffers 17a and 17b are disposed on the upper end of the piston 12 and on the inner bottom surface of the cylinder 9 respectively.

The springs 16a and 16b within the cylinder body 9 locate the piston 12 to a neutral stroke position 14 within the cylinder body 9.

It will be noted that the pair of springs 16a and 16b can be of a so-called dual construction, and for example, separate springs 16c and 16d are shown provided internally thereof.

The passage L3 is located and bored so that when the piston 12 is at the neutral position 14 within the cylinder body 9, the port 15 is closed by the outer periphery of the piston 12.

Disposed in the outer peripheral central portion of the piston 12 is a piston ring 12c urged by a backup ring the piston ring 12c closing openings of the passages L1 and L2 and the port 15.

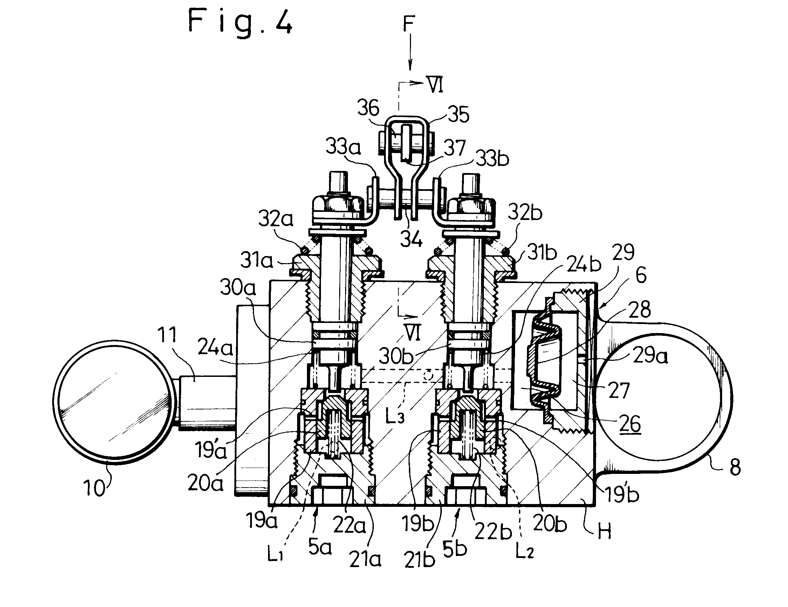

The operation check valves 5a and 5b are disposed in intermediate portions of the passages L1 and L2, respectively, the operation check valves 5a and 5b being identical with each other and each in the form of a poppet valve, as shown in Figure 4.

More specifically, valve seats 19a and 19b are disposed within the housing H, and vertically movable poppets 20a and 20b are received in the valve seats 19a and 19b so that when the poppets 20a and 20b are closed, portions of the passages L1 and L2 upstream and downstream of the poppets 20a and 20b are cut off from one another whereas when the poppets 20a and 20b are open, the passage portions upstream and downstream of the poppets 20a and 20b are in communication.

The poppets 20a and 20b are urged in the closing direction by springs 22a and 22b respectively one end of which is engaged with the side of threaded cap members 21a and 21b in order to fix the seats 19a and 19b within the housing H.

The sleeve bodies 19a and 19b are formed in their outer peripheral sides with annular grooves, respectively, in communication with the passages L1 and L2, the annular grooves communicating with the inner peripheral sides of the sleeve bodies 19a and 19b through ports 19a′ and 19b′ formed in the sleeve bodies 19a and 19b.

The ends of push rods 30a and 30b are opposed to the poppets 20a and 20b.

The housing H includes the reservoir chamber 6, which has a rubber diaphragm 28 which defines a hydraulic chamber 26 and an air chamber 27 within the housing H, the rubber diaphragm 28 having its outer edge fixed by a cap member 29 threaded into the housing so as to separate the air chamber 27 from the outside.

The hydraulic chamber 26 communicates with the passages L1 and L2 through the operation check valves 5a and 5b, and is in communication with the passage L3.

The air chamber 27, in the present embodiment, communicates with the outside through an opening 29a bored in the cap member 29 set so as to maintain the air chamber 27 at atmospheric pressure.

The push rods 30a and 30b opposed to the poppets 20a and 20b are slidably received in cap members 31a and 31b threaded into the housing H and are urged outwardly by means of springs 32a and 32b.

Angle brackets 33a and 33b are secured to outer ends of the push rods 30a and 30b, respectively, the angle brackets 33a and 33b being integrally formed so that they may be moved simultaneously by means of a connecting rod 34.

Connected to the connecting rod 34 is a bracket 35, and the end of an operating lever 37 is connected to a pin 36 inserted through the bracket 35.

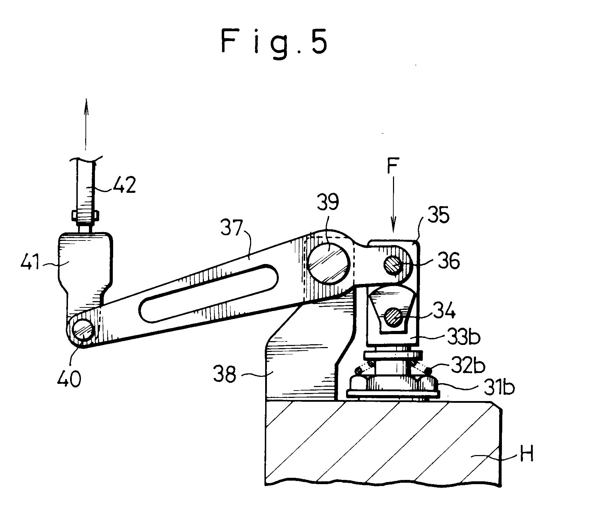

The operating lever 37 is pivoted by a pin 39 on a bracket 38 attached to the housing H, as shown in Figure 5, and connected to a connector 41 by a pin 40 inserted therethrough.

A pulling member, such as a wire 42, is connected to the connector 41, so that the rear end of the operating lever 37 can be rotated by the action of tension applied to the wire 42.

The operation check valves 5a and 5b have the function as check valves wherein the poppets 20a and 20b assume the open state by virtue of the push rods 30a and 30b which are moved forward by the action of the mechanical tension producing an artificial force F, and the push rods 30a and 30b are withdrawn upon release of the tension and removal of the force F whereby the poppets 20a and 20b are closed to form the passages L1 and L2 into unidirectional flow-passages.

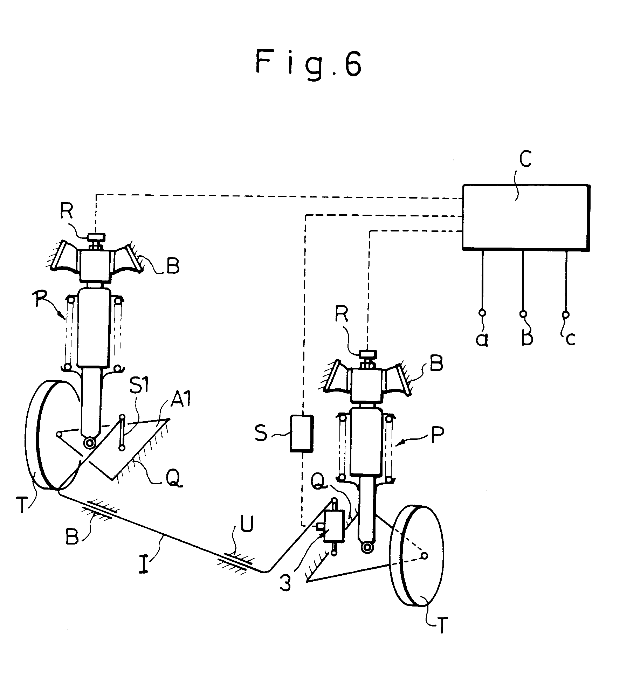

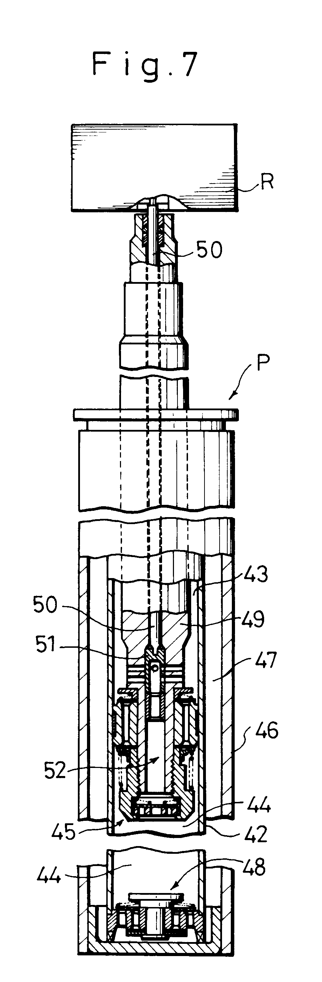

Figures 6 and 7 show an embodiment in which a shock absorber is provided in addition to the stabilizer device described above.

A suspension control device is provided by a suspension construction designed as shown in Figure 6, which suspension construction comprises a shock absorber P disposed between the body side B, U for four wheels of the vehicle and the axle side A, a stabilizer I disposed between left and right wheels T of the vehicle, and a control cylinder 3 disposed between one end of the stabilizer I and a lower arm Q. The damping force of the shock absorber P can be varied by actuation of an actuator R, and the control cylinder 3 is designed so that hardness and softness of the roll rigidity can be adjusted by actuation of an actuator S.

The shock absorber P is sufficient if the former may effect a predetermined damping action when it is expanded and contracted. The shock absorber can be as shown in Figure 7, for example, and comprise a piston portion 45, which is slidably received in a cylinder 42 and divides the interior of the cylinder 42 into a rod-side hydraulic chamber 43 and a piston-side hydraulic chamber 44. An outer tube 46 is provided outwardly of the cylinder 42 and a reservoir chamber 47 is provided between the outer tube 46 and the cylinder 42, the reservoir chamber 47 communicating with the piston-side hydraulic chamber 42 through a base valve portion 48 disposed on the inner bottom at the lower end of the cylinder 42.

When the piston portion 45 is moved up and down within the cylinder 42, a predetermined extension-side damping force and a predetermined pressure-side damping force are produced by the piston portion 45 and the base valve portion 48, respectively.

A piston rod 49 has the piston portion 45 located at the lower end thereof, has its upper end projecting from the upper end of the cylinder 42, and has a control rod 50 rotatably inserted through the axis thereof.

A rotary valve 51 is provided on the lower end of the control rod 50 and is rotatably received in a passage 52 interiorly formed from the lower end of the piston rod 49 to a position near the lower end so that the rod-side hydraulic chamber 43 communicates with the piston-side hydraulic chamber 44.

The upper end of the control rod 50 projects externally from the upper end of the piston rod 49, and the actuator R is connected to the upper end of the control rod 50.

The rotary valve 51 controls, when it rotates, resistance to passage of hydraulic fluid through the passage 52.

Accordingly, when the piston portion 45 is moved up and down within the cylinder 42, the actuator R causes the drawing resistance of fluid passing through the passage 52 to be varied to vary the magnitude of the extension-side damping force produced in the piston portion 45 or the pressure-side damping force produced in the base valve portion 48, whereby the damping effect at the time of expansion of the shock absorber P may be controlled freely according to the running condition of the vehicle or the wish of an operator.

The operation and selection of the operation of the actuator R in the shock absorber P are accomplished by a command signal from a controller C. Signals input into the controller C may include a selection signal a by manual operation, a detection signal b from a vehicle-speed sensor as detection means and a detection signal c from a steering-wheel angle sensor as detection means, (see Figure 6).

Accordingly, for example, when the selection signal a, which makes the produced damping force "hard", is input into the controller C by manual operation according to the wish of the vehicle driver, the produced damping force in the shock absorber P is selected to a high damping force to enhance the running properties when the vehicle runs on an unpaved road.

When the selection signal a, which makes the produced damping force "soft", is input into the controller C, the produced damping force in the shock absorber 1 is formed into a low damping force to allow a comfortable ride when the vehicle runs on a flat road.

When any selection signal a has been input manually into the controller C and, for example, the vehicle is suddenly turned to cause roll phenomenon, the detection signals b and c from the vehicle speed sensor and the steering wheel sensor are input into the controller C, the produced damping force of the shock absorber P is suitably controlled to be high or low, and the aforesaid roll phenomenon, that is, the attitude of the vehicle is controlled.

Likewise in the Figure 1 embodiment, the control cylinder 3 of the stabilizer 1 is disposed betwen one end 1a of the stabilizer 1 provided between the left and right wheels of the vehicle and a lower arm of the vehicle whereby upon the actuation of an actuator connected to the control cylinder 3, the correct expansion thereof is selected.

The other end 1a of the stabilizer 1 is connected to the respective lower arm of the vehicle through the link rod 2, and the intermediate portion of the stabilizer 1 is connected to the body of the vehicle by the supports 4.

The operation and selection of the operation of the actuator S for the control cylinder 3 are accomplished by a command signal from the controller C in a manner similar to the actuation of the actuator R in the shock absorber P but can also be manually accomplished. The operation and effect of the control cylinder 3 are the same as those of the Figure 1 embodiment.

The produced damping force of the shock absorber disposed between the axle side for four wheels of the vehicle and the body side can be adjusted to be high or low, and the roll rigidity of the stabilizer disposed between the left and right wheels of the vehicle can be selected to be hard or soft. Control can thus be effected according to the running condition of the vehicle to give greater comfort in the ride or higher operating stability of the vehicle.

As described above, the upper and lower chambers within the control cylinder communicate with each other through the passage and communicate with the reservoir, and an operation check valve is disposed in each hydraulic fluid passage. Therefore, hardness or softness, that is to say the spring constant of the stabilizer can be made variable merely by opening and closing the operation check valve, and adaption of the vehicle according to the condition of the running road surface of the vehicle may be attained.

Further, even one operation, that is, one pilot operation from a mechanical tension or an artificial force, two operation check valves can be opened at the same time so that no delay in operation occurs.

When a locked state of the control cylinder is desired, the locked state of the control cylinder can be always brought forth quickly in the complete neutral position rapidly to stabilize the attitude of the vehicle.

## Claims

1. A spring-constant variable stabiliser device for a vehicle comprising a stabilizer member (1, I) provided with a control cylinder (3) comprising a piston (12) slidable in a cylinder body (9) so as to divide the interior of the cylinder body into an upper chamber (A) and a lower chamber (B), the control cylinder (3) being disposed between an end of the stabiliser member and a lower suspension arm supporting a wheel (7a, 7b, T) so that the torsional rigidity of the stabilizer member, disposed to generate a torsional torque according to upward and downward operation of the left and right wheels (7a, 7b, T) of the vehicle, is made variable, characterised in that the piston (12) is urged in opposite directions by means of a pair of springs (16a, 16b) disposed in the respective chambers, operation check valves (5a, 5b) are disposed in hydraulic fluid passages ($L_1$, $L_2$) which, respectively, communicate the upper and lower chambers (A, B) with a reservoir chamber (6), the operation check valves (5a, 5b) are each formed to be opened simultaneously by one pilot operation, and a hydraulic fluid port (15) of a fluid passage ($L_3$) in communication with the reservoir chamber (6) is formed in the cylinder body (9) at a location assumed by the piston in a neutral position (14) within the cylinder body (9).

2. A spring-constant variable stabilizer device according to claim 1, wherein the pilot operation is carried out by utilization of an external force (F) such as tension.

3. A spring-constant variable stabilizer device according to claim 1, wherein each operation check valve (5a, 5b) has a poppet (20a, 20b) opposed to a push rod (30a, 30b), and at the time of mechanical pilot operation, the push rod (30a, 30b) moves forward to withdraw the poppet (20a, 20b).

4. A spring-constant variable stabilizer device according to claim 1, including a shock absorber (P) which makes a produced damping force variable by actuation of an actuator (R) and is disposed between a body side of a vehicle and a suspension member (Q), the actuator (R) for the shock absorber (P) being individually actuated by a command signal from a controller (C), and a selection signal (a) caused by manual operation and detection signals (b, c) from detection means such as a vehicle speed sensor and a steering wheel angle sensor are input into the controller (C).

5.   A spring-constant variable stabiliser device for a vehicle comprising a stabilizer member (1, I) provided with a control cylinder (3) comprising a piston (12) slidable in a cylinder body (9) so as to divide the interior of the cylinder body into an upper chamber (A) and a lower chamber (B), the control cylinder (3) being disposed between an end of the stabiliser member and a lower suspension arm supporting a wheel (7a, 7b, T) so that the torsional rigidity of the stabilizer member, disposed to generate a torsional torque according to upward and downward operation of the left and right wheels (7a, 7b, T) of the vehicle, is made variable, characterised in that the piston (12) is urged in opposite directions by means of a pair of springs (16a, 16b) disposed in the respective chambers, operation check valves (5a, 5b) are disposed in hydraulic fluid passages (L₁, L₂), respectively, which communicate the upper and lower chambers (A, B) with a reservoir chamber (6), the operation check valves (5a, 5b) are each formed to be opened simultaneously by one open and closing operation actuator (5), a hydraulic fluid port (15) of a fluid passage (L₃) in communication with the reservoir chamber (6) is formed in the cylinder body (9) at a location assumed by the piston in a neutral position (14) within the cylinder body (9) so that locking can be made only in a neutral position (14), and in addition to the control cylinder (3), a shock absorber (P) the dampening force of which is variable by actuation of an actuator (R) is disposed between a body side (B) of a vehicle and a suspension member (Q), the shock absorber (P) and the actuator (S) of the control cylinder (3) being individually actuated by a command signal from a controller (C), and a selection signal caused by manual operation and detection signals (b, c) from detection means such as a vehicle speed sensor and a steering-wheel angle sensor are input into the controller (C).

**Revendications**

1.   Stabilisateur à caractéristique de ressort variable pour un véhicule comprenant un élément stabilisateur (1, I) doté d'un cylindre de commande (3) comportant un piston (12) pouvant coulisser dans un corps de cylindre (9) de manière à diviser l'intérieur du corps de cylindre en une chambre supérieure (A) et une chambre inférieure (B), le cylindre de commande (3) étant disposé entre une extrémité de l'élément stabilisateur et un bras de suspension inférieur supportant une roue (7a, 7b, T) de manière que la rigidité en torsion de l'élément stabilisateur, disposé pour créer un couple de torsion selon le mouvement ascendant et descendant des roues gauches et droites (7a, 7b, T) du véhicule, soit variable, caractérisé en ce que le piston (12) est sollicité dans des directions opposées au moyen d'une paire de ressorts (16a, 16b) disposés dans les chambres respectives, des soupapes de retenue (5a, 5b) sont situées dans des passages de fluide hydraulique (L1, L2) qui, respectivement, font communiquer les chambres supérieure et inférieure avec une chambre-réservoir (6), les soupapes de retenue (5a, 5b) sont chacune conçues pour être ouvertes simultanément par une commutation pilote, et un orifice de fluide hydraulique (15) d'un passage de fluide (L3) en communication avec la chambre-réservoir (6) est formé dans le corps de cylindre (9) en un emplacement occupé par le piston dans une position neutre (14) au sein du corps de cylindre (9).

2.   Stabilisateur à caractéristique de ressort variable selon la revendication 1, dans lequel la commutation pilote est mise en oeuvre par utilisation d'une force externe (F), par exemple une tension.

3.   Stabilisateur à caractéristique de ressort variable selon la revendication 1, dans lequel chaque soupape de retenue (5a, 5b) comporte un champignon (20a, 20b) à l'opposé d'une tige-poussoir (30a, 30b), et au moment de la commutation pilote mécanique, la tige-poussoir (30a, 30b) se déplace vers l'avant pour faire sortir le champignon (20a, 20b).

4.   Stabilisateur à caractéristique de ressort variable selon la revendication 1, comprenant un amortisseur (P) qui rend variable une force d'amortissement Produite par actionnement d'un dispositif d'actionnement (R) et est disposé entre un côté de la carrosserie d'un véhicule et un élément de suspension (Q), le dispositif d'actionnement (R) pour l'amortisseur (P) étant actionné individuellement par un signal de commande provenant d'un contrôleur (C), et un signal de sélection (a) produit par opération manuelle et des signaux de détection (b, c) provenant de moyens de détection tels qu'un détecteur de vitesse de véhicule et un détecteur d'angle de volant de direction sont introduits dans le contrôleur (C).

5. Stabilisateur à caractéristique de ressort variable pour un véhicule comprenant un élément stabilisateur (1, I) doté d'un cylindre de commande (3) comportant un piston (12) pouvant coulisser dans un corps de cylindre (9) de manière à diviser l'intérieur du corps de cylindre en une chambre supérieure (A) et une chambre inférieure (B), le cylindre de commande (3) étant disposé entre une extrémité de l'élément stabilisateur et un bras de suspension inférieur supportant une roue (7a, 7b, T) de manière que la rigidité en torsion de l'élément stabilisateur, disposé pour créer un couple de torsion selon le mouvement ascendant et descendant des roues gauches et droites (7a, 7b, T) du véhicule, soit variable, caractérisé en ce que le piston (12) est sollicité dans des directions opposées au moyen d'une paire de ressorts (16a, 16b) disposés dans les chambres respectives, des soupapes de retenue (5a, 5b) sont situées dans des passages de fluide hydraulique (LI, L2) qui, respectivement, font communiquer les chambres supérieure et inférieure avec une chambre-réservoir (6), les soupapes de retenue (5a, 5b) sont chacune conçues pour être ouvertes simultanément par un dispositif d'actionnement d'ouverture et de fermeture (5), un orifice de fluide hydraulique (15) d'un passage de fluide (L3) en communication avec la chambre-réservoir (6) est formé dans le corps de cylindre (9) en un emplacement occupé par le piston dans une position neutre (14) au sein du corps de cylindre (9) de manière que le verrouillage puisse uniquement se faire dans une position neutre (14), et en plus du cylindre de commande (3), un amortisseur (P), dont la force d'amortissement peut être modifiée par actionnement d'un dispositif (R), est disposé entre un côté de la carrosserie (B) d'un véhicule et un élément de suspension (Q), l'amortisseur (P) et le dispositif d'actionnement (S) du cylindre de commande (3) étant actionnés individuellement par un signal de commande provenant d'un contrôleur (C), et un signal de sélection produit par opération manuelle et des signaux de détection (b, c) provenant de moyens de détection tels qu'un détecteur de vitesse de véhicule et un détecteur d'angle de volant de direction sont introduits dans le contrôleur (C).

## Patentansprüche

1. Stabilisatoreinrichtung mit einer variablen Federkonstanten für ein Fahrzeug, welches ein Stabilisatorteil (1,I) aufweist, das mit einem Steuerzylinder (3) versehen ist, welcher einen Kolben (12) aufweist, der gleitbar in einem zylindrischen Körper (9) aufgenommen ist, so daß er das Innere des Zylinderkörpers in eine obere Kammer (A) und eine untere Kammer (B) aufteilt, der Steuerzylinder (3) zwischen einem Ende des Stabilisatorteiles und einem unteren Aufhängungsarm angeordnet ist, der ein Rad (7a, 7b, T) haltert, so daß die Drehsteifigkeit des Stabilisatorteiles, welches so angeordnet ist, daß es ein Drehmoment entsprechend der Aufwärts-und Abwärtsbewegung der linken und rechten Räder (7a, 7b, T) des Fahrzeuges erzeugt, variabel gemacht wird, dadurch gekennzeichnet, daß der Kolben (12) von einem paar von Federn (16a, 16b, die in den Jeweiligen Kammern angeordnet sind, in entgegengesetzte Richtungen gedrückt wird, daß Rückschlagventile (5a, 5b) für den Betrieb in Durchgängen (L$_1$, L$_2$) angeordnet sind, welche jeweils die oberen und unteren Kammern (A, B) mit einer Vorratskammer (6) verbinden, daß die Rückschlagventile (5a, 5b) für den Betrieb jeweils so ausgebildet sind, daß sie durch einen Steuervorgang gleichzeitig geöffnet werden, und daß ein hydraulischer Fluidanschluß (15) eines Fluiddurchganges (L$_3$), weicher in Verbindung mit der Vorratskammer (6) steht, in dem Zylinderkörper (9) an einer Stelle ausgebildet ist, die von dem Kolben in einer neutralen Stellung (14) Innerhalb des Zylinderkörpers (9) eingenommen wird.

2. Stabilisatoreinrichtung mit variabler Federkonstante nach Anspruch 1, wobei der Steuervorgang durch Anwendung einer äußeren Kraft (F), wie z.B. eine Zugspannung, ausgeführt wird.

3. Stabilisatoreinrichtung mit variabler Federkonstante nach Anspruch 1, wobei jedes Betätigungsrückschlagventil (5a, 5b) einen Ventilstopfen (20a, 20b) aufweist, der einer Schubstange (30a, 30b) gegenüberliegt, und wobei zum Zeitpunkt des mechanischen Steuervorganges die Schubstange (30a, 30b) sich nach vorn bewegt, um den Ventilstopfen bzw. -Teller (20a, 20b) wegzubewegen.

4. Stabilisatoreinrichtung mit variabler Federkonstante nach Anspruch 1, einschließlich eines Stoßdämpfers (P), der durch Betätigung eines Betätigers (R) eine erzeugte Dämpfungskraft variabel macht und zwischen einer Korpusseite eines Ventils und einem Aufhängteil (Q) angeordnet ist, wobei der Betätiger (R) für den Stoßdämpfer (P) individuell betätigt wird durch ein Befehlssignal von einem Steuergerät (C), und wobei ein Auswahlsignal (a), welches durch manuelle Betätigung hervorgerufen wird, und Erfassungssignale (b, c) von Erfassungseinrichtungen, wie z.B. einem Geschwindigkeitssensor für das Fahrzeug und einem Winkelsensor für den Steuerwinkel des Rades, in das Regelgerät eingegeben werden.

5.  Stabilisatoreinrichtung mit variabler Federkonstante für ein Fahrzeug mit einem Stabilisatorteil (1, l), welches mit einem Steuerzylinder (3) versehen ist, der einen Kolben (12) aufweist, welcher in einem Zylinderkörper (9) gleitbar ist, so daß er das innere des Zylinderkörpers in eine obere Kammer (A) und eine untere Kammer (B) teilt, der Steuerzylinder (3) zwischen einem Ende des Stabilisatorteils und einem unteren Aufhängarm angeordnet ist, weicher ein Rad (7a, 7b, T) haltert, so daß die Drehsteifigkeit des Stabilisatorteiles, weiches so ausgelegt ist, daß es ein Torsionsdrehmoment entsprechend einer Aufwärts- und Abwärts-Betätigung (Bewegung) der linken und rechten Räder (7a, 7b, T) erzeugt, variabel gemacht wird, dadurch gekennzeichnet, daß der Kolben (12) mit Hilfe eines Paares von Federn (16a, 16b), welche in den entsprechenden Kammern angeordnet sind, in entgegengesetzte Richtungen gedrückt wird, daß Betätigungsrückschlagventile (5a, 5b) In hydraulischen Fluiddurchgängen ($L_1$, $L_2$) angeordnet sind, welche die oberen und unteren Kammern (A, B) mit einer Vorratskammer (6) verbinden, daß die Betätigungsrückschlagventile (5a, 5b) jeweils so ausgebildet sind, daß sie gleichzeitig durch einen Betätiger (5) für den Öffnungs- und Schließvorgang geöffnet werden, daß ein hydraulischer Fluidanschluß (15) eines Fluiddurchganges ($L_3$), welcher in Verbindung mit der Vorratskammer (6) steht, in dem zylindrischen Korpus (9) an einer Stelle ausgebildet wird, welche von dem Kolben in einer neutralen Position (14) innerhalb des zylindrischen Körpers (9) angenommen wird, so daß ein Verriegeln nur in einer neutralen Position (14) stattfinden kann, und daß zusätzlich zu dem Steuerzylinder (3) ein Stoßdämpfer (P), dessen Dämpfungskraft aufgrund der Betätigung eines Betätigers (R) variabel ist, zwischen einer Korpusseite (B) eines Fahrzeuges und einem Aufhängteil (Q) angeordnet ist, wobei der Stoßdämpfer (P) und der Betätiger (S) des Steuerzylinders (3) Individuell betätigt werden durch ein Befehlssignal von dem Regelgerät (C), und daß ein Auswahlsignal, welches durch manuelle Betätigung hervorgerufen wird, sowie Erfassungssignale (b, c), von Erfassungseinrichtungen, wie z.B. einem Geschwindigkeitssensor für das Fahrzeug und einem Sensor für den Winkel des Steuerrades, in das Regelgerät (C) eingegeben werden.

# Fig.1

# Fig.2

Fig. 3

Fig.4

EP 0 270 327 B1

# Fig.5

# Fig.6

# Fig. 7